Europäisches Patentamt

European Patent Office

Office européen des brevets

(11) Publication number: 0 266 135
A2

# EUROPEAN PATENT APPLICATION

(21) Application number: 87309376.9

(22) Date of filing: 23.10.87

(51) Int. Cl.⁴: **G11B 20/14** , G11B 20/10 , G11B 20/12 , //G11B5/012

(30) Priority: 27.10.86 US 923622

(43) Date of publication of application:
04.05.88 Bulletin 88/18

(84) Designated Contracting States:
DE ES FR GB IT NL

(71) Applicant: PERSTOR SYSTEMS, INC.
Capital Plaza 1000 E. Williams Street #100
Carson City, NV 89701(US)

(72) Inventor: Fife, Ronald W.
6025 E. Thunderbird Road
Scottsdale, AZ 85032(US)
Inventor: Matin, Safa K.
15611 N.31th Street No. 213
Phoenix Arizona 85032(US)

(74) Representative: Funge, Harry et al
WILSON, GUNN & ELLIS 41-51 Royal
Exchange Cross Street
Manchester M2 7BD(GB)

(54) Apparatus and method for increasing the storage capacity of a disk storage unit.

(57) In a data processing system having an associated magnetic storage device, a controller is disclosed that permits storage capacity of the magnetic storage device to be substantially increased without altering either the data processing system control signals or the portion of the magnetic storage apparatus physically storing and/or retrieving the data signals on the magnetic media. The storage capacity is increased by using an encoding scheme that, although not substantially changing the density of flux reversals on the magnetic media, stores approximately twice the information. Apparatus is disclosed for improving the detection and decoding of the information stored on the magnetic media. The technique for increasing the information density, while particularly relevant to the magnetic hard disk systems used with personal computers because of the capability of increased information storage by altering only the magnetic hard disk controller, can also be used with other information storage systems such as optical storage systems.

Fig. 1

## BACKGROUND OF THE INVENTION

### 1. Field of the Invention

This invention relates generally to the storage of logic signals on a magnetic media and, more particularly, to apparatus and method for increasing the density of stored information using the properties of the read and write mechanisms or the storage media in commercially available logic signal storage devices.

### 2. Description of the Related Art

Magnetic storage devices, particularly of the Winchester type disk drives which operate under the ST506/IEEE412 specifications, can record information at 5 million data signal bits per second. Typically the Winchester drives rotate at a speed of approximately 360 revolutions per minute (RPM), and the magnetic media will accommodate approximately 10,000 flux reversals per inch. The result is that approximately 17 sectors of 512 bytes can be recorded per recording track.

In the disk recording apparatus covered by the ST506/IEEE412 specifications, the encoding, generally referred to as Modified Frequency Modulation (MFM), is used in a soft-sectored mode. The soft-sectored mode means that no physical method is used to specify an orientation of the disk, i.e., a starting orientation for an information group must be encoded in the stored information structure. To identify the sectors, a predetermined pattern of signals, generally referred to as a preamble field, is stored on the magnetic media at the beginning of each sector. This preamble field is interpreted by the control system as preceding a group of information signals and has a defined physical relationship to the information signal group. The preamble fields are generally imposed on the media during the operation referred to as disk "formatting". The time divisions of the information are divided into clock and data periods of time because of the lack of an inherent clocking signal by the Winchester drive. Under the 5 megabit operation, the clock period occupies 100 nanoseconds (ns) and the data period also occupies a period of 100 ns. The result is that an informational bit requires 200ns and results in the 5 million information bits per second being transferred between the disk media and the disk controller. The structure of the Modified Frequency Modulation is such that a flux reversal can be required for both a clock period or a data period, but is never required in both a clock and a data period.

Therefore, the encoding of an informational zero in binary digit format consists of a flux reversal occupying 100 ns and occurring at the clock period and a flux reversal in the clock period and no flux reversal in the data period of time also occupying 100 ns. A variation of the Modified Frequency Modulation is defined such that whenever an informational zero is to be recorded immediately after an informational one, no flux reversals occur in either the clock or data time periods. This modulation technique is referred to as the "missing clock" code structure. Using this code structure, the period of time extending from a flux reversal in the clock period to the next flux reversal is 200 ns. (In other words, the rising edge of the first flux reversal in the clock period to the rising edge of the next flux reversal in the clock period at the highest frequency pattern would occupy a time period of 200 ns.)

In the related art, various attempts to increase the storage capacity of the recording system have focussed on the increase of the recording rate on the magnetic media. These attempts have been unsuccessful due to a combination of factors. One of these factors is that the increase in number of stored signals per inch, or an increase in the stored signal duration, causes a decreased period to time between flux reversals resulting in a roll-off condition, i.e., the frequency response limitation of the device and/or the media. The roll-off condition compromises the ability to recover the stored information signals. A second factor involves the increased noise and jitter resulting from the higher recording rates as well as the decreased window detection period. These effects similarly impact the reliability and usability of the stored information signals.

Prior attempts to raise the storage capacity have been limited to an increase of the recording data rate to 7.5 million bits per second, a 50% increase.

A need has therefore been felt for apparatus and a method by which the already available devices can be utilized to store an increased density of logic signals.

### FEATURES OF THE INVENTION

It is an object of the present invention to provide an improved data processing system.

It is a feature of the present invention to provide an improved magnetic storage apparatus.

It is yet another feature to provide a technique by which the density of logic signals stored on a magnetic media can be increased.

It is still a further feature of the present invention to provide a control mechanism that can be used with existing magnetic storage apparatus that can increase the density of logic signal stored thereon.

It is yet another feature of the present invention to provide a controller architecture that is compatible with popular personal computers.

It is yet another feature of the present invention to provide a Run Length Limited storage technique that can be used with a soft-sectored signal storage implementation.

It is still another feature of the present invention to provide a controller for a signal storage device that can be adapted to operate in conjunction with the central processing units of a plurality of manufacturers.

## SUMMARY OF THE INVENTION

The aforementioned and other features are obtained, according to the present invention, by providing an encoding technique by which individual flux reversals are separated by a distance that is equal to the minimum distances between flux reversals acceptable in the original recording system, but in which the information stored on the media has approximately twice the density as the information originally stored by the system. Apparatus is disclosed for increasing the probability that a stored information signal in the media will be recognized. The apparatus disclosed by the present invention is interposed between the data processing system and the actual storage mechanism and requires no alteration in the apparatus to which it is coupled. An encoding scheme is disclosed that permits the flux reversal conditions to be met. The general technique is applicable to other types of logic signal storage devices.

These and other features of the present invention will be understood upon reading of the following description along with the drawings.

## BRIEF DESCRIPTION OF THE DRAWINGS

Figure 1 is a block diagram of a typical data processing system.

Figure 2A is an illustration of the flux reversals according to the Modified Frequency Modulation encoding scheme, while Figure 2B is an illustration of the Run Length Limited encoding technique.

Figure 3 illustrates the translation table for the Run Length Limited encoding technique of the present invention.

Figure 4A and 4B is a block diagram of the magnetic disk storage system according to the present invention.

Figure 5 is a functional block diagram of the recovered data pulse pre-forming circuit.

Figure 6 is an expanded view of the data recovery circuit.

Figure 7 is a block diagram of the primary disk controller logic.

Figure 8 is a description of the timing and encoding apparatus governing the operation of the disk controller.

Figure 9 illustrates the write protection and cartridge change function.

## DESCRIPTION OF THE PREFERRED EMBODIMENT

### 1. Detailed Description of the Figures

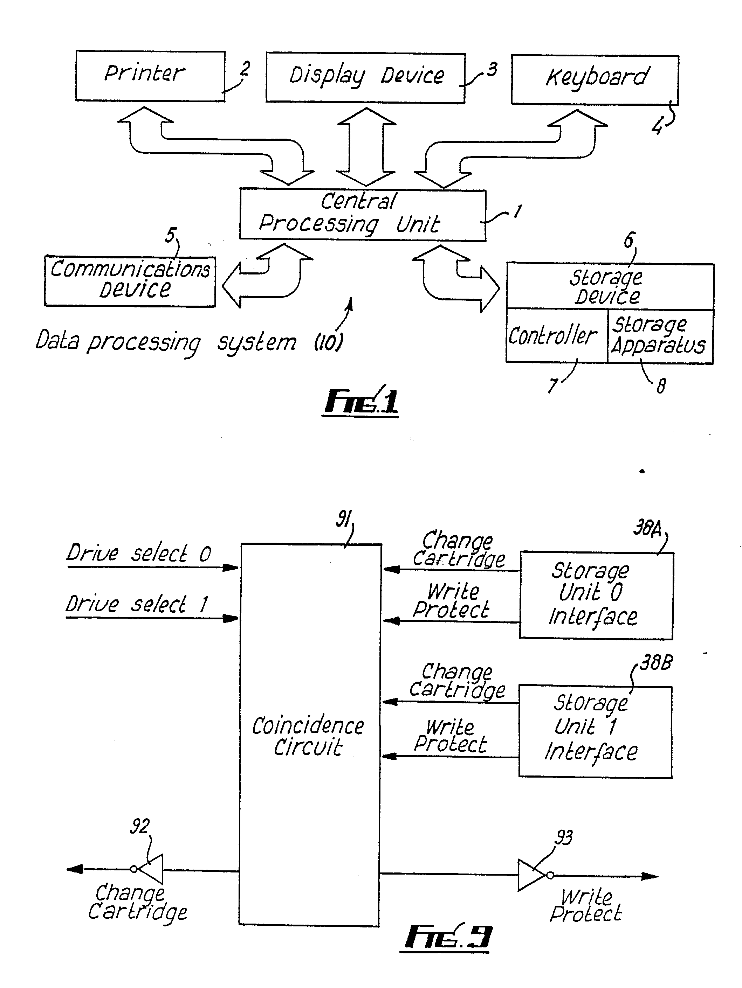

Referring to Fig. 1, a block diagram of a typical data processing system 10 is illustrated. The data processing system 10 includes a central processing unit in which the manipulation of logic signals is performed according to predetermined sequences of instructions. Control of the central processing unit 1 operation by a user is typically through a keyboard. The central processing unit 1 can provide results of the logic signal manipulations (as well as a record of input signals) to a display device 3 and/or to a printer 2. The central processing unit can exchange logic signals with a remote user via a communication device 5 such as modem. Finally, the central processing unit can exchange logic signals with a logic signal storage device 6. This logic signal storage device 6 can be a magnetic tape device , a floppy disk device, a hard disk device, an optical storage device, etc or a combination of of logic signal storage devices. The magnetic disk devices have become increasing important, particularly with the small or personal computers, because of the relatively low cost and relatively fast data access. Indeed, the magnetic disk storage devices have become so attractive that, for personal computers, the leading operating system (the program controlling the operation of the data processing system) is referred to as the Disk Operating System (DOS) and the associated disks are now typically included in the housing as the central processing unit. For purposes of illustrating the importance of the invention, the magnetic storage device 6 can be divided into a controller 7 and a storage apparatus 8. The magnetic storage apparatus 8 includes the storage media, apparatus for controlling movement of the media, apparatus for applying (writing) signals to the media and/or apparatus for detecting (reading) signals stored on the storage media. The signals controlling the activity of the storage device are generated in controller 7 in the response to signals from the central processing unit 1. The signals exchanged with the the central processing unit 1 by controller 7 have a preselected format and the signals exchanged between the controller 7 and the storage apparatus 8 also have a preselected format.

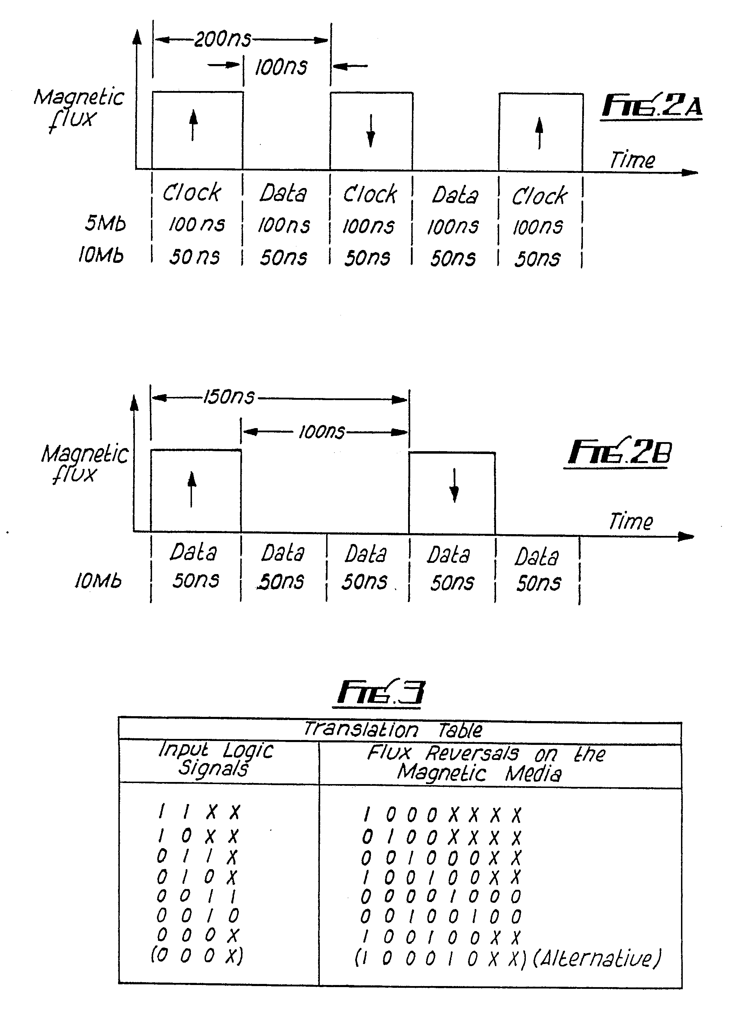

Referring now to Fig. 2A and 2B, the generation of flux reversal signals according to the Modified Frequency Modulation encoding, according to the related art, and an example of Run Length Limited encoding, according to the present invention are illustrated for the case of the maximum density of flux reversals under both encoding techniques. In Fig. 2A, the maximum density of flux reversals stored by the magnetic media for the Modified Frequency Modulation is shown. (This maximum density is the result of storing a plurality of consecutive logic zeros. At the 5 megabit rate, a flux reversal occurs during a so-called clock period, no flux reversal occurs during the so-called data period, and a flux reversal occurs during a next consecutive clock period, etc. The clock and the data periods for the 5 megabit storage rate are 100 ns long. When a doubling of the of the storage rate is attempted using this encoding technique, the clock and data periods must be reduced to 50 ns. As a result, not only must a flux reversal be implanted on the media within this time period with only 50 ns between adjacent flux reversals, the time period between pulses in the case of highest density is 50 ns, imposing additional requirements on the apparatus detecting individual flux reversals. Referring now to Fig. 2B, the highest density of flux reversals for the Run Length Limited encoding technique of the present invention operating at a 10 megabit storage rate is shown. For this implementation, the clock and the data periods are 50 ns in length. However, the a subsequent flux reversal can occur only after two intervening periods, i.e., after 100 ns. Thus, although the flux reversal is stored during a 50 ns period, as with the Modified Frequency Modulation technique, the consecutive flux reversals are separated in time (i.e., by the motion of the media) by 100 ns.

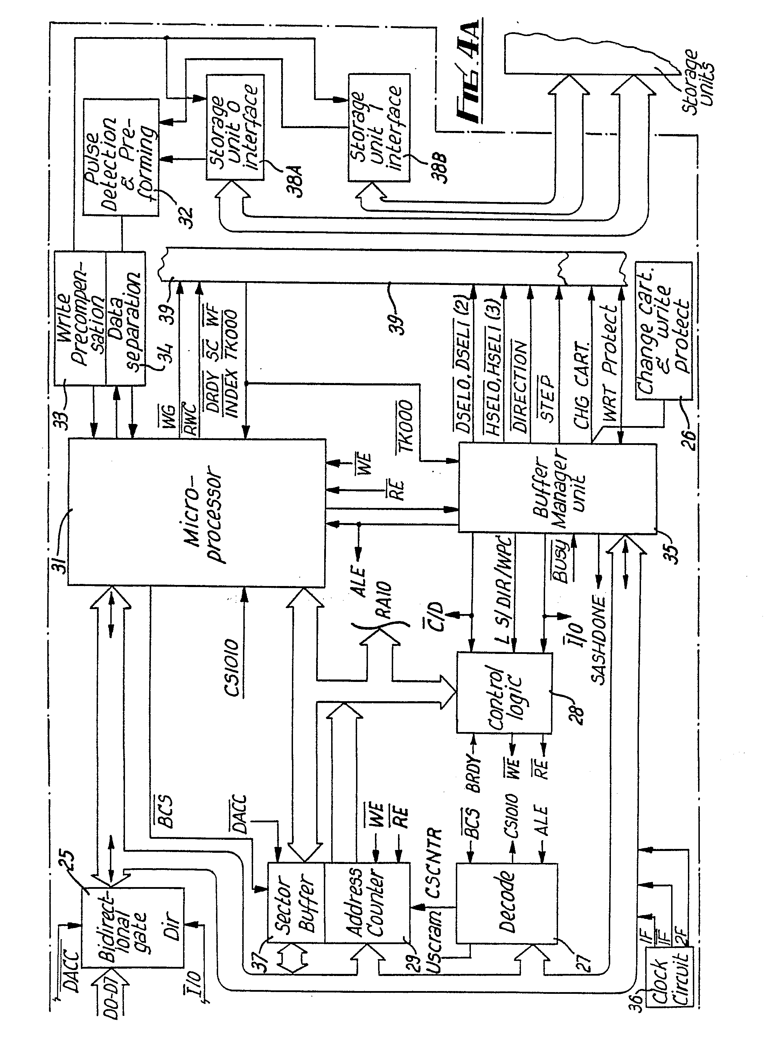

Referring next to Fig. 3, the translation table defining the relationship between the logic information signals used, for example, by a data processing system and the flux reversals on the magnetic storage medium is illustrated for a Run Length Limited encoding technique of the preferred embodiment. The Run Length Limited encoding methodology used by the present invention provides a technique whereby the flux reversals are reordered such that up to three logical zeros require the recording of only two flux reversals. The first flux reversal is followed by two time periods of no flux reversal followed by a flux reversal and two more time periods of no flux reversal. This pattern represents the highest frequency of flux reversals according to the Run Length Limited code of the present invention. In the present invention, the Run Length Limited encoding structure is defined to provide a time period of between 150 and 169 ns from the rising edge of the one flux reversal to the rising edge of the following flux reversal for the highest frequency flux reversal pattern. This frequency can be above the frequency rate specified by some drive manufacturers. Disk drive manufacturers specify the minimum time between the onset of consecutive flux reversals as being between 150 ns and 200ns. (However, compensation for potentially marginal physical characteristics can be achieved using error correcting code techniques. Comparing Fig. 2A and 2B with Fig. 3, using the Modified Frequency Modulation encoding, each of the four logic signals (of the first signal group of Fig. 3) requires 200 ns each or a total of 800 ns. For the Run Length Limited signals (of the corresponding second group of signals of Fig. 3), each flux reversal requires 50 ns so that the entire group requires 400 ns for storage.

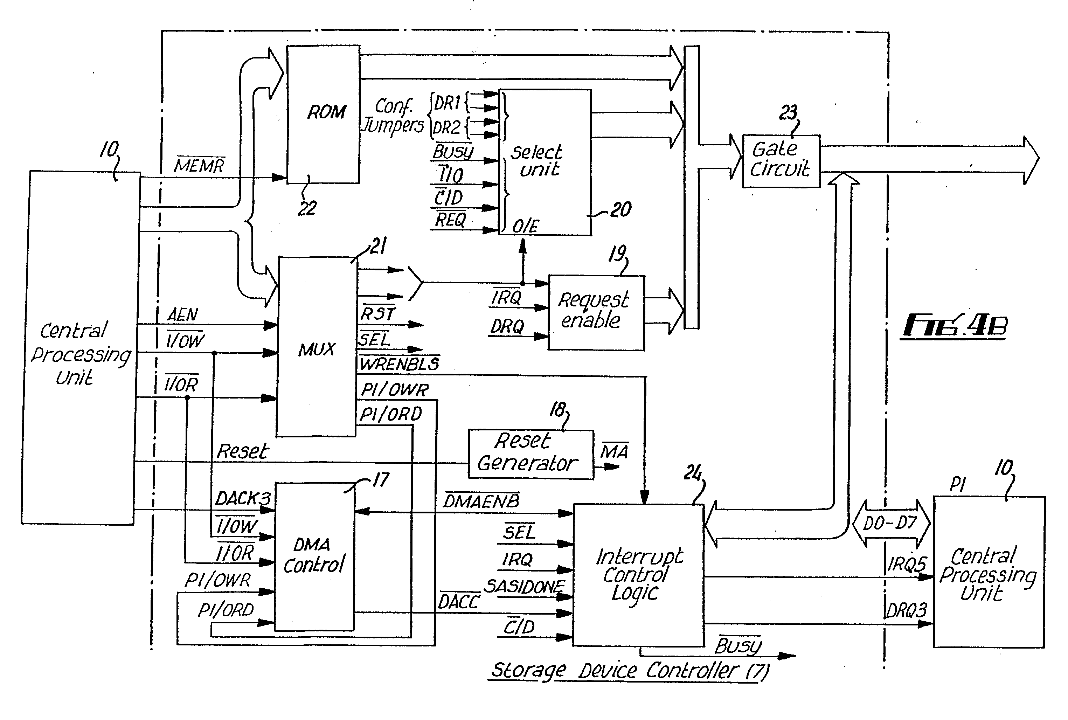

Referring next to Fig. 4A, the block diagram of the system controller according to the present invention is shown. The Winchester disk drive (or drives) are coupled to the system controller via a data interface 38A and 38B and a control interface 39. The interface 38A, 28B and 39 permit the exchange of data signals, write protect signals and change cartridge signals between the individual disk drives and the controller. The data from the data interfaces is processed by the pulse detection and performing network 32 and applied to data separation unit 34. The signals from the data separation unit are applied to controller unit 31. Data signals to be applied to the data interfaces 38A and 38B are transferred from control unit 31 to write precompensation unit 33 and then to the data interface unit 38A or 38B. A data signal bus couples the controller unit 31, a signal transfer gate 25, a sector buffer 37, an address counter unit 29, a decode unit 27 and a buffer manager unit 35. A control signal bus couples the sector buffer unit 37, the address counter unit 29, the controller unit 31 and control logic unit 28. The clock circuit 36 applies clock signals to the data bus. A change cartridge and write protect unit is coupled to the buffer management unit 35. A multiplicity of control signals are generated by and applied to the various units and components illustrated in Fig. 3A.

Referring next to Fig. 4B, the transfer gate 25 is coupled to data signal bus 11 which is in turn coupled to isolation amplifier 23, interrupt control logic unit 24 and to the data processing system 10. The host computer 10 applies signals to a bus 12 that are applied to ROM memory unit 22 and to multiplexer unit 21. Signals from ROM memory unit 22, from O/E unit 20 and from request enable unit 19 are applied to reset generator 18. A multiplicity of special control signals are exchanged between the various units and and components of the controller and the data processing unit 10.

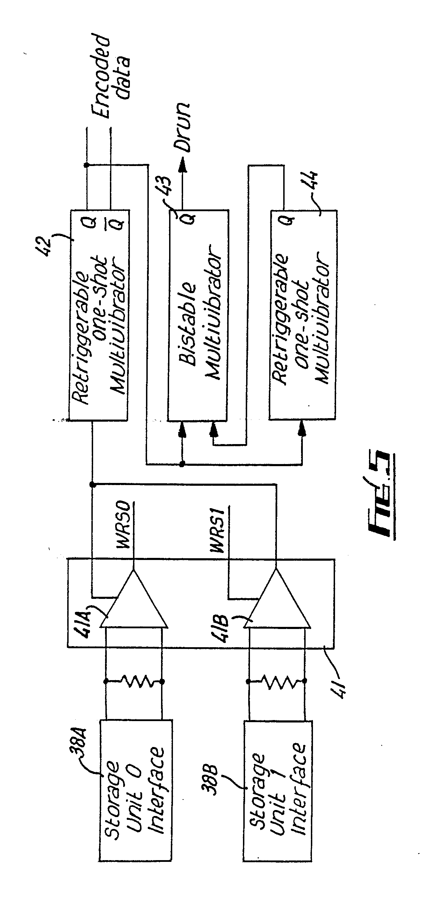

Referring next to Fig. 5, a block diagram of the pulse detection and pre-forming circuit 32 of Fig. 3A is shown. The data signals from the disk are applied to interface units 38A and 38B and are, in turn, applied to isolation amplifiers 41A and 41B respectively of isolation circuit 41. A selected output signal from isolation amplifier circuits 41A or 41B is applied to an input terminal of retriggerable one-shot multivibrator 42. The Q and the $\overline{Q}$ terminals provide the encoded data signal, while the Q terminal of retriggerable multivibrator 41 is applied to an input terminal of the bistable multivibrator 43 and to an input terminal of retriggerable one shot multivibrator 44. The Q terminal of retriggerable one-shot multivibrator 44 is coupled to an input terminal of bistable multivibrator circuit 43, the Q terminal of bistable multivibrator circuit 43 providing a DRUN signal.

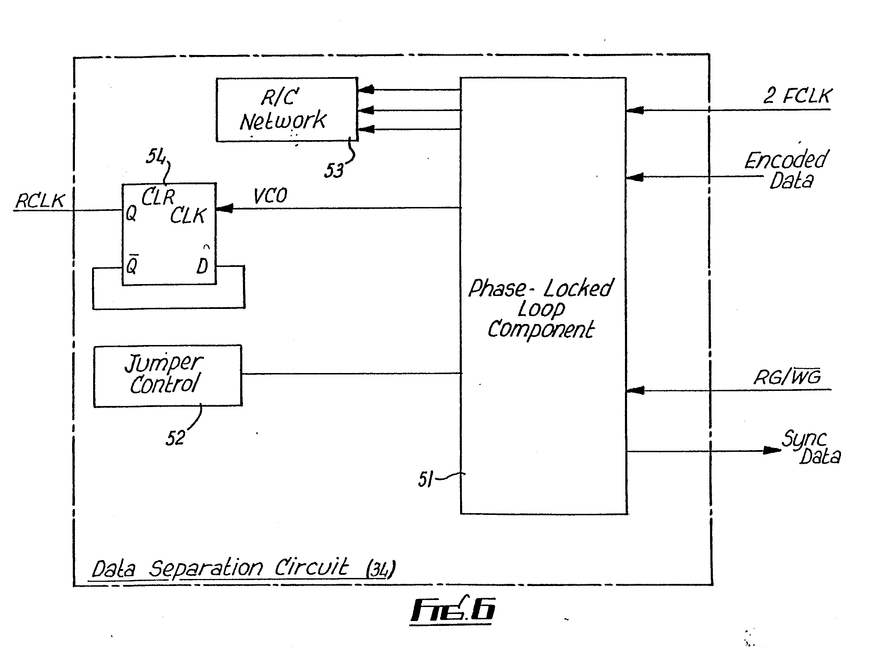

Referring next to Fig. 6, a block diagram of a data separation circuit is shown. The basic circuit component is a phase locked loop unit 51 (which in the preferred embodiment is a National Semiconductor 8465 component). The R/C network 53 coupled to the phase locked loop 51 determines the parameters of the units. The phase-locked loop unit 51 receives encoded data from retriggerable one-shot multivibrator 42 (Fig. 4) and receives 2FCLK signals from clock circuit 36 (Fig. 3A). The signal from the Voltage Controlled Oscillator (VCO)- of the phase locked loop is applied to clock terminal of bistable multivibrator unit 54, a $\overline{Q}$ terminal being coupled to a D terminal of said multivibrator unit 52, and a Q terminal of the multivibrator 54 providing the RCLK signal. An RG/WG signal is applied to the multivibrator 54 and the SYNCH DATA signal is applied to an output terminal of the phase locked loop.

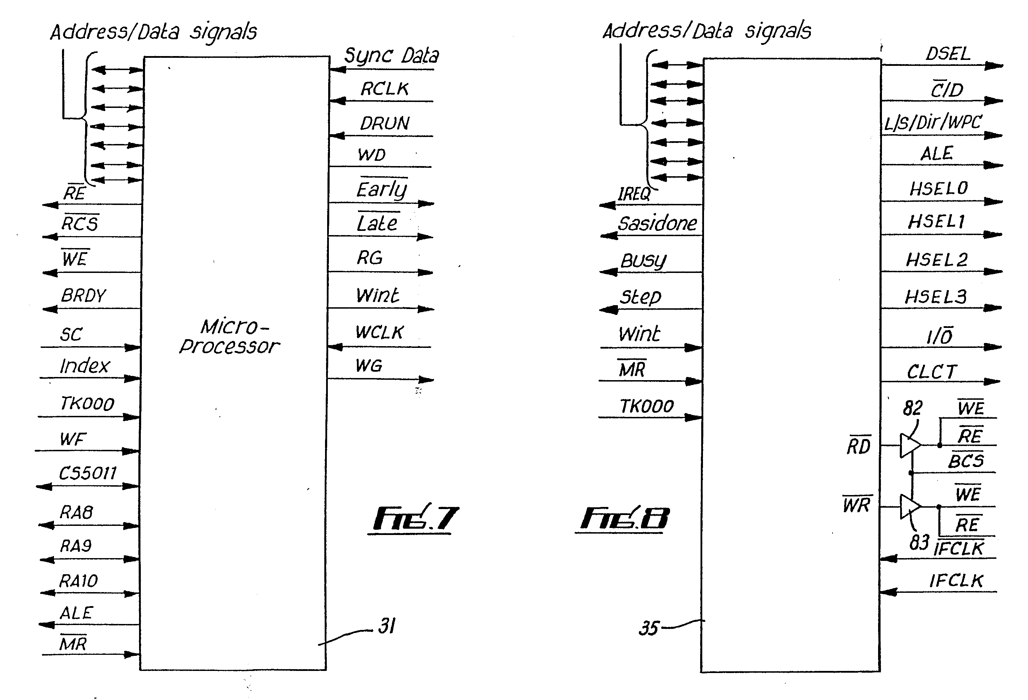

Referring next to Fig. 7, the signals applied to and received from the microprocessor unit 31 (which in the preferred embodiment can be a Western Digital 5011-10 unit) are illustrated. The microprocessor unit 31 exchanges address/data signals with the controller bus. The microprocessor 31 also exchanges the controller select signal (CS5011) and the control signals (RA8, RA9 and RA10)with the remainder of the controller 7. The microprocessor 31 receives the synchronized data signal (synch data), the read clock signal (RCLK), the drive run signal (DRUN), the seek complete signal (SC), the index signal, the track zero signal (TK000), the write fault signal (WF), the write clock signal (WCLK), and the master reset signal ($\overline{MR}$). The microprocessor 31 generates the read enable signal ($\overline{RE}$) the buffer select signal ($\overline{BCS}$), the write enable signal ($\overline{WE}$), the the buffer ready signal (BRDY), the address latch enable signal (ALE), the write data signal (WD), precompensation signals ($\underline{EARLY}$ and $\underline{LATE}$), the read gate signals (RG), the (Winchester) disk interrupt signal (WINT) and the write gate signal (WG).

Referring next to Fig. 8, the buffer manager unit 35 (Fig. 3A for controlling the operation of controller 7 as the interface between the central processing unit 1. The buffer management unit 35 (which in the preferred embodiment is an Intel 8749 component) is coupled to the address/data signal bus for exchanging signals therewith. The buffer management unit 35 receives clock signals (1FCLK and $\underline{1FCLK}$), the master reset signal ($\overline{MR}$) and the track 0 signal (TK000). The buffer management unit generates drive select signals (DSEL), control data signals ($\underline{C}$/D), the direction signals (LIS/DIR/WPC), the address latch enable signal (ALE), the head select n signals (HSELn), the input/output signals (I/$\overline{O}$), the clock control signal (CLCT), the interrupt request signal (IREQ), the complete signal ($\overline{SASIDONE}$), the busy signal, the step pulse signal, the drive interrupt signal (WINT), and the master reset signal. The $\overline{RD}$ and the $\overline{WR}$ output signals applied respectively to amplifiers 82 and 83 respectively, which, in turn provide the write enable $\overline{WE}$ and the $\overline{RE}$ signals respectively when activated by the buffer select signal ( $\overline{BCS}$). The buffer manager unit also receives the change cartridge signals and write protect signals.

Referring next to Fig. 9, a block diagram of the change cartridge and write protect circuit 26 (Fig. 4A) is shown. Coincidence circuit 91 receives the drive select 0 and the drive select 1 signals designating the storage unit scheduled for the next activity. A change cartridge signal and/or a write protect signal are applied to coincidence circuit 91 via storage unit 0 interface 38A when associated sensing devices are activated in storage unit 0. Similarly, a change cartridge signal and/or a write protect signal are applied to coincidence circuit 91 via storage unit 1 interface 38B when associated sensing mechanisms in storage unit 1 are activated. The coincidence of a signal from a storage unit and the corresponding drive select signal will result in a change cartridge signal being applied to an output terminal of isolation amplifier 92 and/or a write protect signal being applied to an output terminal of isolation amplifier 93 indicating to the central processing unit 10, respectively, that the cartridge in the selected storage unit has been changed since the last attempt at access and/or that data can be read from the selected storage unit, but can not be written into the selected storage unit.

## 2. Operation of the Preferred Embodiment

One aspect of the invention can be understood by reference to Fig. 1. In that Figure, the controller 7 of a hard disk storage device 6 for an already existing device can be replaced with the controller of the present invention. The controller 7 of the present invention is adapted to receive signals from the central processing unit that have a predetermined protocol and format and apply appropriate signals to the storage apparatus 8. Similarly, the signals from the storage apparatus are analyzed by the controller 7 and transferred to the central processing unit without requiring alteration in either the central processing unit or the storage apparatus 8.

Referring to Fig. 43, the apparatus illustrated therein is apparatus that performs functions typically found in a storage controller unit, particularly a controller unit associated with a hard disk storage unit. The only significant change has been to implement these functions in a manner to accommodate the increased signal storage and retrieval rates. With respect to Fig. 4A, the buffer manager unit 35 has been implemented with a programmable microcontroller. The programmable microcontroller can be adapted to respond appropriately to different set of control signals from the central processing unit. By varying the response to the control signal groups, the central processing units of different manufacturers can coupled to the storage device and storage unit controller, as a result of the flexibility in response to the control signals can provide an appropriate interface. The microprocessor 31 manipulates the signals to provide appropriate encoding and decoding functions and processes control information.

The data is transmitted on a differential interface having a signal lead and a ground lead with a resistor interconnection between the two signals. The drive selection signal selects one of the storage unit #0 interface 38A or the storage unit #1 interface 38B corresponding to the two drives. The resulting data pulses are then processed by component 42, which is a retriggerable one-shot multivibrator serving as a pulse detector and a pulse pre-former. The resistor and capacitor values of this retriggerable one-shot multivibrator are critical and will be described in detail. Upon a data pulse being applied to component 42, the Q output terminal changes level by sensing the positive going edge and provides a signal to flip-flop circuit 43 which produces a DRUN signal to activate the controller unit 31. Simultaneously, the arriving pulse sets a second retriggerable one-shot multivibrator 42 whose values are set to correspond to the time period repetition of the sector preamble. When the sector preamble is detected, the one-shot multivibrator 42 will continue to be retriggered by the first half of the multivibrator 44 component pulse detector so as to maintain Drunk and to provide and maintain for the data recovery circuit and the controller unit 31 to be in the signal acquisition mode. In the event that a false signal has been detected, that is, not the beginning of a sector preamble, the DRUN signal will be removed, turning off the data recovery circuit and inactivating the controller unit 31 so as to prevent the false recognition of a preamble. The DRUN signal, when it is present for the requisite period of time, informs the micropressor 31 that a valid preamble has been detected and to analyze the subsequent signals in a predetermined manner.

The resulting encoded data signal derived from the first stage of retriggerable one-shot multivibrator 42 is forwarded to the phase locked loop synchronization circuit 51. The phase locked loop data synchronization circuit 51 is capable of operating at frequencies up to 20 MHz. This circuit provides phase frequency comparison, preamble recognition, phase locked loop filtering, and data synchronization. This circuit is provided with a reference clocking signal, referred to as the 2F Clock, operating at twice the data rate. In addition, it is provided with a read gate signal generated by the microprocessor 31 as a result of the previously mentioned DRUN signal. The data separator circuit begins to track the encoded information and to produce a voltage-controlled oscillator output (or read clock signal) which is at twice the bit rate. This read clock is synchronized to the middle of the encoded data pulse referred to as synchronized data.

The synchronized data enters the microprocessor 31 in conjunction with the voltage-controlled oscillator divided by two as a result of a DRUN signal from high speed bistable multivibrator 43. The synchronized data and read clock data is then assembled to bytes of information whereby clock and data signals are separated within the microprocessor 31 shifted into a shift register and transferred into a sector buffer random access memory (RAM) unit 37.

This sector buffer RAM unit 37 is a two purpose device, providing local memory to the microcontroller and the second half is used to buffer the sector data received from the disk drive and to hold it for an orderly transfer into the data processing system through either programmed loop or direct memory access. This buffering allows the disk drive to operate at varying speeds without regard to the speed of the data processing system itself. The determination as to whether the sector buffer RAM unit 37 will be used as local memory to the microprocessor 31 or as a sector buffer memory unit is determined by the combined operation of decode unit 27, the address counter unit 29 and the control logic unit 28.

The controller allows transfer through the host interface logic developed by the interrupt control logic 24 and direct memory access control unit 17, allowing the controller board to be positioned at any interrupt request level and through interrupt control logic 24 and direct memory access control unit 17 to provide direct memory access (DMA) transfer on any DMA channel. Then the memory address bus of the computer is interfaced through ROM unit 22 to allow a read-only memory circuit to become part of the memory of the data processing system. It thereby provides a basic input and output system stored in read-only memory which is compatible with the data processing system.

Last, the controller system allows the port address of the controller to select by means of jumpers any port address through multiplexer unit 21. In addition, selection unit 20 (and, in the preferred embodiment, a jumper) allow the selection of various disk drives up to 64 stored in the read only memory to be properly handled by the controller board circuitry.

First, the retriggerable one-shot multivibrator 42 is a pulse pre-former element used to determine a pulse duration, depending on model, from 50 ns to 100 ns. Because the Run Length Encoding scheme assures there will be no pulse occurring for two time periods following each pulse occurrence, this pulse width duration assures that the effective flux reversal rate is still within the 5 million bit per second tolerance originally designed for the drive.

Secondly, the data recovery circuit, being designed to operate at a very high data rate, contributes only 6 of jitter to the data pulse timing window. Because the data pulse timing window can be up to 50 ns, the data pulse is allowed to jitter 44 of the 50 ns of jitter possible and still be detected in correct time phase,

Last, because the flux reversals on the disk affect adjacent flux reversals, an early-late write precompensation amounting to 10 ns is applied based upon the preceding and following bits as defined in Figure 3. The characteristics of the phase locked loop data recovery circuit are governed by various resistor and capacitor values. These resistor and capacitor values affect the pulse gate charge pump voltage-controlled oscillator center frequency and loop filter. The component values can be chosen allow acquisition of information encoded under either Modified Frequency Modulation or under Run Length Limited encoding.

Because the minimum time between flux reversals has been slightly decreased by approximately 25%, an increase in the error rate can be a possible result for magnetic storage systems having marginal characteristics. To minimize the impact of this potential error increase on the performance, the error correcting code associated with the storage of the logic signal can be increased (in the preferred embodiment the increase is from 24 bits per sector to 56 bits per sector). In addition, the present invention provides for a controllable recording rate so that when a system shows unacceptable performance characteristics, i.e., such as too large a percentage of uncorrectable errors, the frequency of operation can be reduced somewhat raising the percentage of uncorrectable errors to an acceptable level.

Using the present invention, the approximately 17 (512 byte) sectors can be increased to 31, 32 and up to 36 sectors per track, without altering the storage media or associated apparatus, by recording up to 12 million bits per second. Thus, the present invention provides up to 120% increase in capacity of the information storage system. By using an appropriate Run Length encoding structure to achieve this increase in storage capacity, the number of flux reversals per inch is not significantly increased. This increased density of flux reversals is achieved by remaining the duration of the flux reversal signal (50 ns), by remaining within the separation of consecutive flux reversals (100 ns) and by a modest decrease in the separation between leading edges of consecutive flux reversals (200 ns vs 150 ns) of the ST506/IEEE412 specification.

According to another aspect of the invention, the signal storage unit is adapted to use a Run Length Limited logic signal encoding without the use of a reference frequency associated with the storage media. According to the present invention, a reference frequency at approximately one half the frequency of the periods of the stored signals, i.e. for a 50 ns storage period, the reference frequency would be 100 MHz. The stored signals are used in a phase locked loop arrangement to establish phase coherence between the retrieved stored signals and the reference frequency. This coherence permits the determination of the position of each retrieved stored signal relative to the reference frequency. Using a portion of the preamble as a reference, the position of each retrieved signal can be determined and, using the translation table, the microprocessor can decode the retrieved signals and place the decoded signals in a format for transfer to the central processing unit. This technique can be applied to any moving media storage device for improved storage characteristics.

The foregoing description is included to describe the preferred embodiment and is not meant to limit the scope of the invention. The scope of the invention is to be limited only by the following claims. From the foregoing description, any variations will be apparent to those skilled in the art that would yet be encompassed by the spirit and scope of the invention.

## Claims

1. In a logic signal storage device adapted to store and/or retrieve said logic signals stored by storage apparatus in a format including a clock period and a data period for each stored information unit in response to preselected input signals, said logic signal storage device providing preselected output signals, a controller comprising:
retrieval means responsive to said preselected input signals for causing said storage apparatus to provide an output signal in response to a stored information signal, said stored information unit not having a timing period associated therewith;
timing means responsive to said storage apparatus output signals for establishing timing parameters associated with said storage unit output signals; and
decoding means responsive to said storage apparatus output signals and said timing parameters for providing said preselected output signals.

2. The logic signal storage device of Claim 1 wherein said retrieval means further includes a pulse shaping means for shaping said storage apparatus output signals.

3. The logic signal storage device of Claim 2 wherein said format including a clock period and a data period is a Modified Frequency Modulation format and said stored information signal format is a Run Length Limited format.

4. The logic signal storage device of Claim 2 further comprising encoding means responsive to said preselected input signals for storing information signals not having a timing period associated therewith in said storage apparatus.

5. The logic signal storage device of Claim 4 wherein said logic signal storage device is a magnetic disk unit for use with a small data processing system, said controller adapted to replace a magnetic disk unit controller adapted for operation consistent with ST506/IEEE412 specifications without additional modification of said magnetic disk unit.

6. The logic signal storage device of Claim 5 wherein said controller permits a storage density of information units of over 8 million bits per second using storage apparatus meeting said ST506/IEEE412 specifications.

7. The logic signal storage device of Claim 2 wherein said timing means includes a phase locked loop unit.

8. The logic signal storage device of Claim 7 wherein a group of said information signals not having timing information associated therewith has a preamble signal group included therein, said preamble signal group being utilized by said timing means to establish said timing parameters.

9. For use in a magnetic disk device capable of storing and retrieving information on a magnetic media by associated apparatus in response to data and control signals from a data processing system, a controller comprising:
encoding means responsive to signals from said data processing system for causing said magnetic media to store approximately twice an amount of information utilizing substantially a equivalent density of flux reversals on said media; and
decoding means responsive to signals caused by detection of said media flux reversals for reproducing information stored on said media.

10. The magnetic disk device controller of Claim 9 wherein said decoding means includes shape forming means for providing a signal in response to a detected flux reversal on said media; and timing means for inserting timing parameters for signals resulting from detected magnetic media flux reversals.

11. A logic signal storage unit responsive to preselected input signals for providing preselected output signals comprising:
storage means responsive to control signals for interacting with a signal; storage media, said storage means providing an output signal in response to a stored information signal, wherein said storage means does not include apparatus for providing a reference signal; and
control means responsive to said preselected input signals for providing control signals to said storage means and for receiving said storage means output signals, said control means also providing said preselected output signals, said control means including:
timing means to determining timing parameters associated with said storage means output signals, and
decoding means responsive to said timing parameters and said storage means output signals for determining logic signal related thereto.

12. The logic storage apparatus of Claim 11 wherein said timing means includes a phase locked loop means for synchronizing said storage means output signals with a reference frequency source.

13. The logic storage apparatus of Claim 12 wherein said reference frequency source has a frequency above 8 MHz and said storage means is adapted to operate in accordance with ST506/IEEE412 specifications.

14. A logic signal storage unit for retrieving and/or storing signals on a storage media, said logic storage means including detection means for providing an encoded signal in response to detection of a stored signal on said storage media, wherein said stored signals on said media have a soft-sectored format, said logic storage unit comprising:
period means for associating said encoded signal with one of a plurality of consecutive periods;
delay means for determining a delay quantity of said one associated period relative to a reference period; and
translation means responsive to at least one of said delay quantities for identified a logic signal.

15. The logic signal storage unit of Claim 14 wherein said storage signals are encoded with a Run Length Limited format.

16. The logic signal storage unit of Claim 15 wherein said period means includes a phase locked loop means, said phase locked loop means for synchronizing said stored signals and a reference oscillator.

17. The logic signal storage unit of Claim 16 wherein said period means further includes a wave-shape forming means for providing a standard wave-form in response to a detection of a stored signal.

18. The logic signal storage unit of Claim 17 wherein said delay means determines said delay quantity with reference to a preamble of said stored signal.

19. The logic signal storage unit of Claim 18 wherein said storage means operates in accordance with ST506/IEEE412 specifications at a logic signal information storage rate above 8 megabits per second.

20. The logic signal storage apparatus of Claim 19 further comprising processor means for adapting said logic signal storage unit to operate with a plurality of types of data processing systems.

| Printer | 2 | Display Device | 3 | Keyboard |
|---|---|---|---|---|

Central Processing Unit — 1

Communications Device — 5

Storage Device — 6

| Controller | Storage Apparatus |
|---|---|
| 7 | 8 |

Data processing system (10)

**FIG.1**

Drive select 0

Drive select 1

Coincidence Circuit — 91

Change Cartridge

Write Protect

Storage Unit 0 Interface — 38A

Change Cartridge

Write Protect

Storage Unit 1 Interface — 38B

92 — Change Cartridge

93 — Write Protect

**FIG.9**

## Fig.2A

Magnetic flux

← 200ns →
→ 100ns ←
Time

| | Clock | Data | Clock | Data | Clock |
|---|---|---|---|---|---|
| 5Mb | 100 ns | 100 ns | 100 ns | 100 ns | 100 ns |
| 10Mb | 50 ns | 50 ns | 50 ns | 50 ns | 50 ns |

## Fig.2B

Magnetic flux

← 150ns →
← 100ns →
Time

| | Data | Data | Data | Data | Data |
|---|---|---|---|---|---|
| 10Mb | 50ns | 50ns | 50ns | 50ns | 50ns |

## Fig.3

| Translation Table | |
|---|---|
| Input Logic Signals | Flux Reversals on the Magnetic Media |
| 1  1  X  X | 1  0  0  0  X  X  X |
| 1  0  X  X | 0  1  0  0  X  X  X |
| 0  1  1  X | 0  0  1  0  0  0  X  X |
| 0  1  0  X | 1  0  0  1  0  0  X  X |
| 0  0  1  1 | 0  0  0  0  1  0  0  0 |
| 0  0  1  0 | 0  0  1  0  0  1  0  0 |
| 0  0  0  X | 1  0  0  1  0  0  X  X |
| (0  0  0  X) | (1  0  0  0  1  0  X  X) (Alternative) |

FIG. 4A

0 266 135

ROM

Conf. Jumpers { DR1 { DR2 {

Busy
$\overline{T/O}$
$\overline{C/D}$
$\overline{REQ}$

Select unit

O/E

23

Gate Circuit

20

$\overline{MEMR}$

22

10

Central Processing Unit

21

MUX

$\overline{RST}$
$\overline{SEL}$
$\overline{WRENBLS}$
PI/OWR
PI/ORD

AEN
$\overline{I/OW}$
$\overline{I/OR}$

19

$\overline{IRQ}$
DRQ

Request enable

F1G.4B

18

Reset Generator   $\overline{MA}$

Reset

17

DACK3
$\overline{I/OW}$
$\overline{I/OR}$
PI/OWR
PI/ORD

DMA Control

$\overline{DMAENB}$
$\overline{SEL}$
IRQ
SASIDONE
$\overline{DACC}$
$\overline{C/D}$

24

Interrupt Control Logic

$\overline{Busy}$

10

PI

DO-D7

Central Processing Unit

IRQ5

DRQ3

Storage Device Controller (7)

0 266 135

**38A**
Storage
Unit 0
Interface

**38B**
Storage
Unit 1
Interface

**41A**

**41B**

WRS0

WRS1

**41**

**42**
Retriggerable
one-shot
Multivibrator — Q / Q̄

Encoded
data

**43**
Bistable
Multivibrator — Q → Drun

Retriggerable
one-shot
Multivibrator — Q
**44**

_Fig.5_

0 266 135

Data Separation Circuit (34)

FIG.6

0 266 135

**Fig. 7**

Microprocessor — 31

Signals: Sync Data, RCLK, DRUN, WD, $\overline{Early}$, $\overline{Late}$, RG, Wint, WCLK, WG

Address/Data signals

$\overline{RE}$, $\overline{RCS}$, $\overline{WE}$, BRDY, SC, Index, TK000, WF, CS5011, RA8, RA9, RA10, ALE, $\overline{MR}$

**Fig. 8**

— 35

Address/Data signals

DSEL, $\overline{C/D}$, L/S/Dir/WPC, ALE, HSEL0, HSEL1, HSEL2, HSEL3, $I/\overline{O}$, CLCT, $\overline{WE}$, $\overline{RE}$, $\overline{BCS}$, $\overline{WE}$, $\overline{RE}$, IFCLK, IFCLK

82, 83, $\overline{RD}$, $\overline{WR}$

IREQ, Sasidone, BUSY, Step, Wint, $\overline{MR}$, TK000